# FASCICULE DE BREVET EUROPEEN

(11) **EP 1 197 698 B1**
(45) Date de publication et mention de la délivrance du brevet: **07.09.2005**
(21) Numéro de dépôt: 01402605.8
(22) Date de dépôt: 09.10.2001
(51) Int. Cl.: F16L 3/26, H02G 3/36

(54) **Attache de suspension**
Aufhängevorrichtung
Suspension attachment

(30) Priorité: 11.10.2000 FR 0013007
(43) Date de publication de la demande: 17.04.2002
(73) Titulaire: I.C.M. Group, 21500 Montbard (FR)
(72) Inventeur: Deciry, James, 60200 Compiegne (FR); Durin, Michel, 78330 Fontenay-le-Fleury (FR)
(74) Mandataire: Santarelli

(56) Documents cités:
- US-A- 5 316 244

## Description

La présente invention a pour objet une attache de suspension destinée à être montée sur une tige, telle que par exemple une tige filetée, et constituée d'un corps métallique comportant une partie support en forme de crochet et, à l'opposé de celle-ci, une partie de fixation par laquelle elle-même est fixée.

De telles attaches sont par exemple utilisées pour la suspension de structures en treillis, telles que des chemins de câbles en fils, la partie support en forme de crochet étant adaptée à recevoir l'un des éléments longilignes ou fils de ladite structure.

Une attache connue de ce genre, decrite par exemple dans US 5 316 244 A, comprend une partie de fixation, substantiellement plane, munie d'une échancrure. Ainsi, il est possible, grâce à son échancrure, de monter, par déplacement latéral de l'attache par rapport à la tige, l'attache sur une tige déjà installée, voir rajouter une telle attache à d'autres existantes ; la tige étant filetée, il suffit de placer, de part et d'autre de la partie de fixation de l'attache, des écrous du type ouverts, à fixation rapide, et de les serrer ; ce serrage doit être effectué pour le soutien de l'attache, même si sa position n'est pas définitive.

Pour éviter cet inconvénient, on avait proposé de remplacer l'échancrure par un trou traversant, mais une telle disposition nécessite d'enfiler la partie de fixation sur la tige et ne permet pas de la monter sur une tige filetée déjà installée, pour ajouter sur celle-ci d'autres attaches.

La présente invention a pour but de proposer une attache de suspension qui puisse être montée latéralement sur une tige déjà installée et se maintenir d'elle-même sur celle-ci dans une position qui peut ne pas être sa position définitive, la mise en place de l'attache étant ainsi facilitée.

Selon l'invention, une attache de suspension destinée à être montée sur une tige, telle qu'une tige filetée, et constituée d'un corps métallique comportant une partie support en forme de crochet et, à l'opposé de celle-ci, une partie de fixation substantiellement plane munie d'une échancrure, est caractérisée par le fait que, à l'entrée de ladite échancrure, une patte dite de maintien issue de l'un de ses bords s'étend obliquement par rapport au plan de l'échancrure en étant à une distance du bord opposé de l'échancrure permettant le passage de ladite tige.

Avantageusement, le crochet de la partie support est en forme de U dont les ailes s'étendent perpendiculairement à la partie de fixation.

De préférence, la partie support se raccorde à la partie de fixation par l'une de ses ailes qui se prolonge selon une partie en oblique dite médiane se prolongeant elle-même selon une partie dite de raccordement parallèle aux ailes du U de la partie support.

Avantageusement, la partie de raccordement est dans le prolongement de l'autre aile, dite libre, du U de la partie support.

De préférence, la partie médiane en oblique s'étend parallèlement à la patte de maintien.

Avantageusement, la largeur de l'échancrure est variable.

De préférence, l'échancrure comporte une succession d'empreintes partielles de tiges de diamètres différents.

Avantageusement, l'échancrure est dissymétrique, l'un de ses bords étant droit et s'étendant parallèlement aux ailes de la partie support.

De préférence, la partie médiane en oblique comporte un trou.

Avantageusement, la partie médiane en oblique présente une patte pliable obtenue par découpe en L de l'un de ses bords latéraux.

De préférence, la patte de maintien est déformable en sorte de pouvoir être disposée dans le plan de la partie de fixation.

Pour mieux faire comprendre l'objet de l'invention, on va en décrire maintenant, à titre d'exemple, purement illustratif et non limitatif, un mode de réalisation représenté sur les dessins annexés.

Sur ces dessins :
- la figure 1 est une vue en perspective montrant une attache de suspension selon l'invention ;
- la figure 2 est une vue selon la flèche II de la figure 1 ;
- la figure 3 est une vue selon la flèche III de la figure 1 ;
- la figure 4 est une vue selon la flèche IV de la figure 1 ;
- les figures 5 à 7 sont des vues en élévation montrant le montage de l'attache selon les figures 1 à 4 sur une tige filetée ;
- la figure 9 illustre une application de l'attache de suspension selon l'invention ;
- la figure 10 est analogue à la figure 9 et illustre une variante de mise en oeuvre ;
- les figures 11 à 13 sont analogues aux figures 5 à 7, la tige filetée étant d'un diamètre moindre.

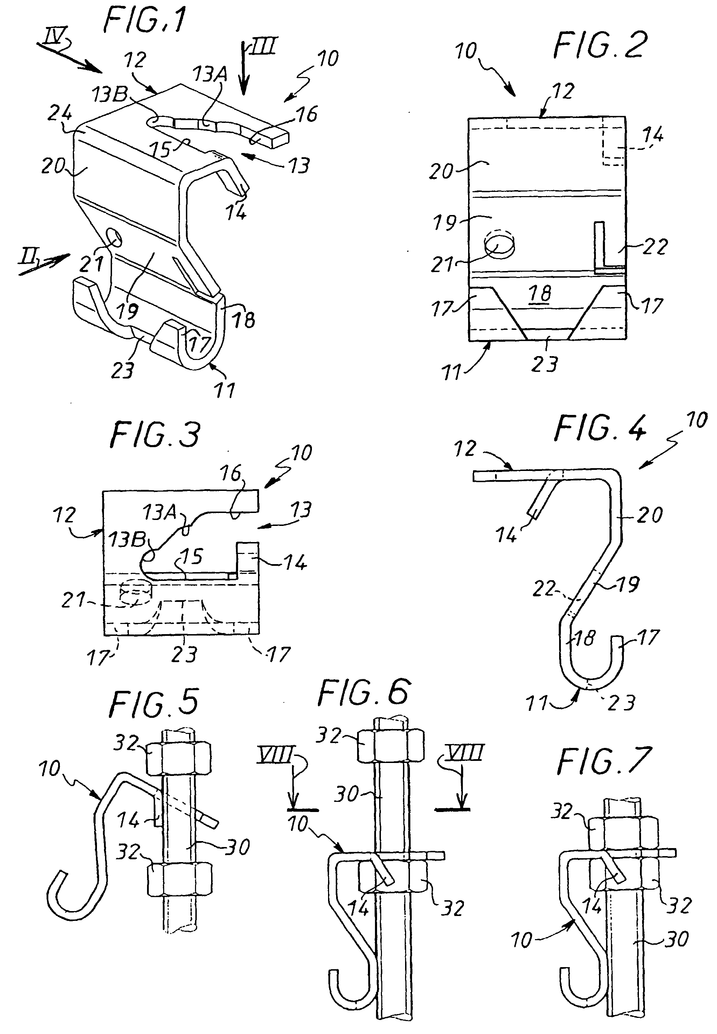

En se reportant aux figures 1 à 4, on voit qu'une attache de suspension 10 selon l'invention est constituée d'un corps métallique, obtenu par découpe et pliage d'une tôle métallique, qui comporte une partie support 11 et une partie de fixation 12.

La partie support 11 est en forme de crochet, lui-même en forme de U ayant deux ailes 17 et 18 ; ici, l'aile 17 dite libre, par opposition à l'aile 18 par laquelle la partie support 11 est reliée à la partie de fixation 12, présente une découpe centrale 23, mais il peut ne pas en être ainsi.

La partie de fixation 12 est substantiellement plane et s'étend globalement perpendiculairement aux ailes 17, 18 de la partie support 11.

L'aile 18 de la partie support 11 se prolonge selon une partie en oblique dite médiane 19, se prolongeant elle-même selon une partie dite de raccordement 20, parallèle aux ailes 17, 18 de la partie de support 11 et raccordée directement à la partie de fixation 12.

Ici, la partie de raccordement 20 est dans le prolongement de l'aile libre 17 de la partie support 11, c'est-à-dire dans le même plan que celle-ci.

La partie de fixation 12 est munie d'une échancrure 13 ; dans la forme représentée, l'échancrure 13 s'étend globalement transversalement dans la partie de fixation 12, c"est-à-dire globalement parallèlement au pli 24 de raccordement de ladite partie de fixation 12 à la partie de raccordement 20.

A l'entrée de l'échancrure 13, une patte 14 dite de maintien est issue de l'un des bords, ici le bord 15, de l'échancrure 13 et s'étend obliquement par rapport au plan de l'échancrure 13.

Dans la forme représentée, les parties de fixation 12 et support 11 s'étendent de part et d'autre des parties médiane 19 et de raccordement 20, la patte de maintien 14 étant dirigée vers l'intérieur, c'est-à-dire, par rapport à la partie de fixation 12, du même côté que celui où se situe la partie support 11.

Dans la forme représentée, la patte de maintien 14 s'étend parallèlement à la partie médiane en oblique 19.

L'attache de suspension 10 est destinée à être montée sur une tige, telle qu'une tige filetée, qui s'étend verticalement.

Le bord 16, dit opposé, de l'échancrure 13, qui est disposé à l'opposé de la patte de maintien 14, et donc face à elle, est à une distance de celle-ci, mesurée perpendiculairement à la patte de maintien 14, qui permet le passage, en oblique, d'une tige filetée dont le diamètre est au plus égal à cette distance.

Ainsi, comme on le comprend aisément, après passage d'une telle tige filetée de la manière ci-dessus, en position normale de l'attache 10, dans laquelle la partie de fixation 12 s'étend alors perpendiculairement à l'axe longitudinal de la tige filetée, l'attache 10 est maintenue sur la tige dont elle ne peut être séparée ; cette position est obtenue quasiment automatiquement, par gravité, car, comme cela est représenté, les parties support 11 et de fixation 12 s'étendent transversalement de part et d'autre des parties médiane 19 et de raccordement 20, l'échancrure 13 étant par ailleurs décalée en sorte qu'elle se situe au delà du plan de l'aile 18 de raccordement ; ici, le fond de l'échancrure 13 est pratiquement au droit de ce plan.

Ceci est illustré par les figures 5 à 8 ; sur la figure 5, l'attache de suspension 10 a été "enfilée" par son échancrure 13 sur la tige filetée 30 entre deux écrous 32 ; en lâchant l'attache 10, celle-ci prend par gravité la position figure 6 ; on remarquera qu'elle reste en place verticalement par effet de levier, sous l'action de son propre poids, les bords de l'échancrure 13 étant retenus par le filet de la tige filetée 30.

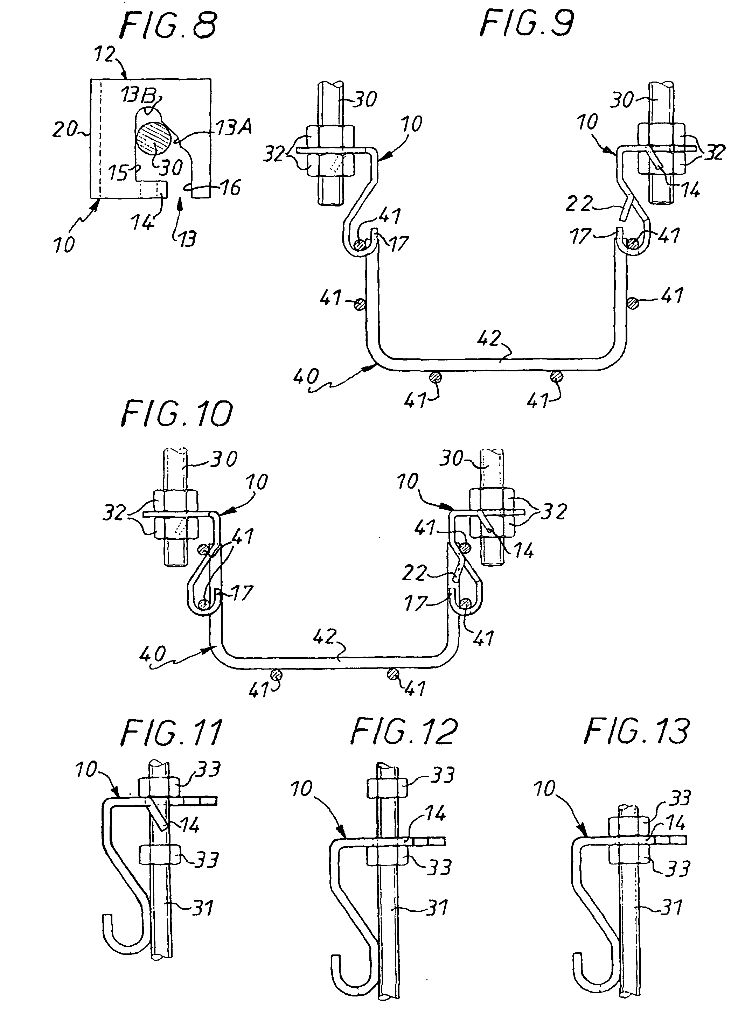

Dans cette position, l'attache 10 est retenue transversalement, comme le montre la figure 8 ; il suffit alors de serrer les écrous 32 pour fixer l'attache 10 dans sa position définitive, figure 7.

Ainsi, l'attache selon l'invention facilite, comme on l'a vu, sa mise en place, qui se fait quasiment mains libres, sans outillage particulier.

La figure 9 illustre un exemple de mise en oeuvre de telles attaches de suspension 10 ; selon cet exemple, il s'agit de suspendre un chemin de câbles en fils 40 ; celui-ci est, de manière connue en soi, constitué de fils longitudinaux 41 reliés par soudage par des fils transversaux 42 pliés en U pour réaliser une structure en treillis en forme de gouttière destinée à recevoir des câbles ou autres produits filiformes.

Ici, les fils longitudinaux 41 supérieurs, dits de rive, prennent place dans la forme en crochet de la partie support 11 de l'attache de suspension 10.

En variante, comme montré sur la figure 10, ce ne sont pas les fils de rive 41 qui prennent place dans la forme en crochet de l'attache mais les seconds fils longitudinaux 41, les fils de rive 41 étant eux en appui sur la partie médiane en oblique de l'attache, ceci conférant une meilleure assise au chemin de câbles.

Selon la figure 10, le fil de rive et le second fil 41 sont de part et d'autre de la partie médiane en oblique ; en variante, ils sont du même côté : dans ce cas, le chemin de câbles est immobilisé verticalement dans les deux sens.

Comme cela est visible sur les figures 1 à 4, la partie médiane en oblique 19 présente latéralement une patte 22 obtenue par découpe en L de l'un de ses bords latéraux ; par pliage de cette patte 22 en direction du bord de l'aile libre 17 de la partie support 11 de l'attache de suspension 10, on emprisonne, figure 9, le fil longitudinal de rive 41 monté dans cette partie support 11, la longueur de la patte 22 étant prévue en sorte qu'il en soit ainsi.

Un résultat analogue peut être obtenu en mettant en place, dans un trou 21, figures 1 et 2, ménagé dans la partie médiane 19 en oblique, un rivet, une clavette, goupille, ou analogue, par exemple en matière plastique.

Dans la forme représentée, la largeur de l'échancrure 13 est variable ; celle-ci est dissymétrique ; l'un 15 de ses bords est droit, et s'étend ici parallèlement aux ailes 17,18 de la partie support 11, plus précisément parallèlement au pli 24 de raccordement, et l'autre bord est globalement incliné par rapport à celui-ci ; avantageusement, ce bord incliné porte des empreintes partielles de tiges de diamètre différents, ici deux empreints 13A, 13B ; l'empreinte 13A correspond, figure 8, à la tige 30 des figures 5 à 10.

L'empreinte 13B correspond à une tige 31, figures 11 à 13, de plus petit diamètre : ces figures sont analogues aux figures 5 à 7, respectivement ; ici, après mise en place de l'attache sur une telle tige 31, figure 11, le maintien sur la tige est obtenu en déformant la patte de maintien 14 pour la disposer dans le plan de la partie de fixation 12, figure 12.

## Revendications

1. Attache de suspension destinée à être montée sur une tige, telle qu'une tige filetée (30, 31), et constituée d'un corps métallique comportant une partie support (11) en forme de crochet et, à l'opposé de celle-ci, une partie de fixation (12) substantiellement plane munie d'une échancrure (13), **caractérisée par le fait que**, à l'entrée de ladite échancrure (13), une patte dite de maintien (14) issue de l'un (15) de ses bords (15, 16) s'étend obliquement par rapport au plan de l'échancrure (13) en étant à une distance du bord opposé (16) de l'échancrure (13) permettant le passage de ladite tige (30, 31).

2. Attache de suspension selon la revendication 1, **caractérisée par le fait que** le crochet de la partie support (11) est en forme de U dont les ailes (17, 18) s'étendent perpendiculairement à la partie de fixation (12).

3. Attache de suspension selon la revendication 2, **caractérisé par le fait que** la partie support (11) se raccorde à la partie de fixation (12) par l'une (18) de ses ailes (17,18) qui se prolonge selon une partie en oblique dite médiane (19) se prolongeant elle-même selon une partie dite de raccordement (20) parallèle aux ailes (17, 18) du U de la partie support (11).

4. Attache de suspension selon la revendication 3, **caractérisée par le fait que** la partie de raccordement (20) est dans le prolongement de l'autre (17) aile, dite libre, du U de la partie support (11).

5. Attache de suspension selon l'une des revendications 3 ou 4, **caractérisée par le fait que** la partie médiane (19) en oblique s'étend parallèlement à la patte de maintien (14).

6. Attache de suspension selon l'une des revendications 1 à 5, **caractérisée par le fait que** la largeur de l'échancrure (13) est variable.

7. Attache de suspension selon la revendication 6, **caractérisée par le fait que** l'échancrure (13) comporte une succession d'empreintes partielles (13A, 13B) de tiges de diamètres différents.

8. Attache de suspension selon l'une des revendications 6 ou 7, **caractérisée par le fait que** l'échancrure (13) est dissymétrique, l'un (15) de ses bords (15,16) étant droit et s'étendant parallèlement aux ailes (17, 18) de la partie support (11).

9. Attache de suspension selon l'une des revendications 3 à 8, **caractérisée par le fait que** la partie médiane en oblique (19) comporte un trou (21).

10. Attache de suspension selon l'une des revendications 3 à 9, **caractérisée par le fait que** la partie médiane en oblique (19) présente une patte pliable (22) obtenue par découpe en L de l'un de ses bords latéraux.

11. Attache de suspension selon l'une des revendications 1 à 10, **caractérisée par le fait que** la patte de maintien (14) est déformable en sorte de pouvoir être disposée dans le plan de la partie de fixation (12).

## Patentansprüche

1. Aufhängebefestigung, die an einer Stange, wie zum Beispiel einer Gewindestange (30, 31), befestigt werden soll und aus einem Metallkörper besteht, der einen Tragebereich (11) in Form eines Hakens und diesem gegenüber liegend einen im Wesentlichen ebenen und mit einer Aussparung (13) versehenen Befestigungsbereich (12) aufweist, **dadurch gekennzeichnet, dass** am Eingang der Aussparung (13) eine so genannte Haltelasche (14), die aus einem ihrer Ränder (15, 16) gebildet wird, sich schräg bezüglich der Ebene der Aussparung (13) erstreckt und einen Abstand zum gegenüber liegenden Rand (16) der Aussparung (13) aufweist, wodurch der Durchgang der Stange (30, 31) ermöglicht wird.

2. Aufhängebefestigung nach Anspruch 1, **dadurch gekennzeichnet, dass** der Haken des Tragebereichs (11) die Form eines U hat, dessen Schenkel (17, 18) senkrecht zum Befestigungsbereich (12) verlaufen.

3. Aufhängebefestigung nach Anspruch 2, **dadurch gekennzeichnet, dass** der Tragebereich (11) an den Befestigungsbereich (12) über einen (18) seiner Schenkel (17, 18) anschließt, der sich in einem so genannten mittleren, schrägen Bereich (19) fortsetzt, der sich selbst in einem so genannten Anschlussbereich (20) parallel zu den Schenkeln (17, 18) des U des Tragebereichs (11) fortsetzt.

4. Aufhängebefestigung nach Anspruch 3, **dadurch gekennzeichnet, dass** der Anschlussbereich (20) sich in der Verlängerung des anderen, so genannten freien Schenkels (17) des U des Tragebereichs (11) befindet.

5. Aufhängebefestigung nach einem der Ansprüche 3 oder 4, **dadurch gekennzeichnet, dass** der mittlere schräge Bereich (19) parallel zur Haltelasche (14) verläuft.

6. Aufhängebefestigung nach einem der Ansprüche 1 bis 5, **dadurch gekennzeichnet, dass** die Breite der Aussparung (13) variabel ist.

7. Aufhängebefestigung nach Anspruch 6, **dadurch gekennzeichnet, dass** die Aussparung (13) eine Folge von Teilvertiefungen (13A, 138) für Stangen unterschiedlicher Durchmesser aufweist.

8. Aufhängebefestigung nach einem der Ansprüche 6 oder 7, **dadurch gekennzeichnet, dass** die Aussparung (13) unsymmetrisch ist, wobei einer (15) ihrer Ränder (15, 16) gerade ist und parallel zu den Schenkeln (17, 18) des Tragebereichs (11) verläuft.

9. Aufhängebefestigung nach einem der Ansprüche 3 bis 8, **dadurch gekennzeichnet, dass** der mittlere schräge Bereich (19) ein Loch (21) aufweist.

10. Aufhängebefestigung nach einem der Ansprüche 3 bis 9, **dadurch gekennzeichnet, dass** der mittlere schräge Bereich (19) eine faltbare Lasche (22) aufweist, die durch L-förmiges Ausschneiden eines seiner Seitenränder erhalten wird.

11. Aufhängebefestigung nach einem der Ansprüche 1 bis 10, **dadurch gekennzeichnet, dass** die Haltelasche (14) so verformbar ist, dass sie in der Ebene des Befestigungsbereichs (12) angeordnet werden kann.

## Claims

1. A suspension bracket adapted to be mounted on a rod, such as a screw threaded rod (30, 31), and constituted by a metal body including a hook-shaped support part (11) and, opposite said support part, a substantially plane fixing part (12) provided with a notch (13), **characterized by** the fact that, at the entry of said notch (13), a retaining lug (14) projecting from one (15) of its edges (15, 16) extends obliquely with respect to the plane of the notch (13) while being at a distance from the opposite edge (16) of the notch (13) enabling the passage of said rod (30, 31).

2. The suspension bracket claimed in claim 1, **characterized by** the fact that the hook of the support part (11) is in the form of a U the flanges (17, 18) of which extend perpendicularly to the fixing part 12.

3. The suspension bracket claimed in claim 2, **characterized by** the fact that the support part (11) is connected to the fixing part (12) by one (18) of its flanges (17, 18) which is continued by an oblique middle part (19) which is in turn continued by a connecting part (20) parallel to the flanges (17, 18) of the U-shape of the support part (11).

4. The suspension bracket claimed in claim 3, **characterized by** the fact that the connecting part (20) is aligned with the other flange (17), referred to as the free flange, of the U-shape of the support part (11).

5. The suspension bracket claimed in one of claims 3 or 4, **characterized by** the fact that the oblique middle part (19) extends parallel to the retaining lug (14).

6. The suspension bracket claimed in one of claims 1 to 5, **characterized by** the fact that the width of the notch (13) varies.

7. The suspension bracket claimed in claim 6, **characterized by** the fact that the notch (13) includes a succession of partial imprints (13A, 13B) of different diameter rods.

8. The suspension bracket claimed in one of claims 6 or 7, **characterized by** the fact that the notch (13) is asymmetrical, one (15) of its edges (15, 16) being straight and extending parallel to the flanges (17, 18) of the support part.

9. The suspension bracket claimed in one of claims 3 to 8, **characterized by** the fact that the oblique middle part (19) includes a hole (21).

10. The suspension bracket claimed in one of claims 3 to 9, **characterized by** the fact that the oblique middle part (19) includes a bendable lug (22) obtained by cutting an L-shape into one of its lateral edges.

11. The suspension bracket claimed in one of claims 1 to 10, **characterized by** the fact that the retaining lug (14) is deformable such that it can be situated in the plane of the fixing part (12).
